# EUROPÄISCHE PATENTSCHRIFT

(11) **EP 3 021 094 B1**
(45) Veröffentlichungstag und Bekanntmachung des Hinweises auf die Patenterteilung: **09.05.2018**
(21) Anmeldenummer: 15194154.9
(22) Anmeldetag: 11.11.2015
(51) Int. Cl.: G01G 21/24

(54) **PARALLELOGRAMMLENKERSTRUKTUR FÜR EINE WAAGE**
PARALLELOGRAM LINKAGE STRUCTURE FOR A WEIGHING DEVICE
STRUCTURE DE BRAS OSCILLANT PARALLELOGRAMME POUR UNE BALANCE

(30) Priorität: 13.11.2014 DE 202014105467 U
(43) Veröffentlichungstag der Anmeldung: 18.05.2016
(73) Patentinhaber: WIPOTEC GmbH, 67657 Kaiserslautern (DE)
(72) Erfinder: Gottfriedsen, Jan, 67714 Waldfischbach-Burgalben (DE); Stellwagen, Tobias, 67655 Kaiserslautern (DE)
(74) Vertreter: Eder, Thomas

(56) Entgegenhaltungen:
- DE-B- 1 052 708
- US-A- 5 771 986
- US-B1- 6 232 567
- US-B1- 6 365 847

## Beschreibung

Die vorliegende Erfindung betrifft eine Parallelogrammlenkerstruktur für eine Waage, insbesondere eine nach dem Prinzip der elektromagnetischen Kraftkompensation arbeitende Waage, nach dem Oberbegriff des Anspruchs 1.

Solche Parallelogrammlenkerstrukturen dienen dazu, einen Lastaufnehmer unter Last parallel zu einem in der Regel ortsfesten Grundkörper zu führen. Über eine mit dem Lastaufnehmer gekoppelte Hebelanordnung wird die Bewegung des Lastaufnehmers ein- oder mehrmals untersetzt und dadurch verstärkt, um schließlich die Auslenkung eines Hebels oder eines daran angeordneten Magneten oder einer Spule messtechnisch zu erfassen.

Aus Stabilitätsgründen sind die beiden den Lastaufnehmer führenden Parallellenker (im Weiteren auch "Parallelführungselemente") in Bewegungsrichtung Z des Lastaufnehmers möglichst weit zueinander beabstandet. Zwischen diese Parallelführungselemente ragt der Grundkörper hinein, um dort Stützstellen für das vorgenannte Hebelwerk auszubilden. Dabei ergibt sich für hochgenaue Waagen das Problem, dass der hervorkragende Teil des Grundkörpers (auch "Festland" genannt) eine begrenzte Steifigkeit hat. Diese ist umso geringer, je näher die beiden Parallelführungselemente in Z-Richtung beieinander liegen, das vorkragende Festland also nur mit entsprechend geringerer Höhe ausgeformt werden kann. Ein größerer Abstand der Parallelführungselemente in Z-Richtung gestattet zwar auch ein entsprechend stärker dimensioniertes Festland zwischen ihnen, dies geht jedoch zulasten der möglichst gering zu haltenden Gesamtabmessungen der Parallelogrammlenkerstruktur.

Um ein möglichst stabiles, biegesteifes Festland zwischen den Parallelführungselementen zu gewährleisten sieht der Stand der Technik vor, die Parallelführungselemente innerhalb der monolithischen Struktur zu durchbrechen und einen Teil des Grundkörpers hindurch zu führen, auch um den vorkragenden Teil abzustützen.

Aus der DE 32 30 998 C2 ist bekannt, einen vertikal durch den unteren Parallelogrammlenker hindurch ragenden Festlandvorsprung vorzusehen zur Ausbildung einer Hebelstützstelle. In ähnlicher Weise wird auch in der US 4,100,985 A verfahren, wobei hier statt eines Grundkörperabschnitts ein Hebelwerk durch den Parallelogrammlenker geführt wird.

Die DE 20 008 066 U1 zeigt eine monolithische Parallelogrammlenkerstruktur, bei der jeder Parallelogrammlenker mittig von einer Ausnehmung durchsetzt wird, um Zugang für Bearbeitungswerkzeuge zu schaffen, ohne den hervorkragenden Teil des Grundkörpers zusätzlich abzustützen.

Die DE 197 29 623 B4 zeigt, wie ein langgestreckter Grundkörper mittels zweier Schrauben an einem Wagenchassis befestigt ist, wobei die beiden Schrauben eine Öffnung innerhalb des unteren Parallellenkers durchdringen. Die Durchdringung des Parallelogrammlenkers in der Mitte hat den Nachteil, dass die Befestigung schmal wird und daher Torsionssteifigkeit verringert wird. In einer weiteren Ausführungsform von DE 197 29 623 B4 wird eine seitliche Befestigung des vorkragenden Teils des Grundkörpers vorschlagen. Durch die seitlichen Befestigungelemente wird das Gesamtsystem zwar sehr steif, aber es vergrößert sich auch die Breite des erforderlichen Bauraums. In beiden Fällen wird in nicht vorteilhafter Weise der messtechnisch empfindliche vorkragende Teil des Grundkörpers durch Anschraubkräfte beeinflusst.

Aus der US 6,365,847 B1 ist ein monolithischer Wägeblock bekannt, bei dem die kraftübertragenden Hebel zum Teil symmetrisch beidseitig eines im Zentrum hervorkragenden Grundkörperabschnitts geführt werden. Die Gestaltung des vorkragenden Grundkörperabschnitts dient der Aufnahme von Lagerstellen der Hebel. Eine Stabilisierung des Grundkörperabschnitts selbst ist nicht thematisiert.

Die DE 10 52 708 B beschreibt eine Kraftmesseinrichtung in monolithischer Ausführung. Ein beweglicher Abschnitt des Lastaufnehmers erstreckt sich dabei zwischen die Parallelführungselemente und ist durch eine in den Parallelführungselementen ausgebildete Ausnehmung mit einer Gewichtskraft belastbar. Ein ortsfester Grundkörper erstreckt sich nicht zwischen die Parallelführungselemente.

Aus der US 5,771,986 A ist ein monolithischer Wägeblock bekannt, mit einer trapezförmigen Parallellenkerkonstruktion. Ein in vertikaler Richtung zwischen den Parallellenkern angeordneter Abschnitt eines Systemträgers dient dabei als Lagerstelle für eine Hebelmechanik. Mittel zur Stabilisierung oder Versteifung des Grundkörperabschnitts sind nicht angegeben.

Aufgabe der Erfindung war es daher, eine verbesserte Parallelogrammlenkerstruktur anzubieten, welche gegenüber Kräften in Messrichtung und Momenten mit horizontaler Drehachse besonders steif ist und wenig Bauraum benötigt. Außerdem sollten die Befestigungspunkte möglichst weit von der Hebelstützstelle entfernt liegen.

Die Aufgabe wird gelöst durch eine Parallelogrammlenkerstruktur nach Anspruch 1. Weitere vorteilhafte Ausführungsformen ergeben sich aus den Unteransprüchen.

Die Erfindung beruht auf der Erkenntnis, einen besonders steifen Grundkörperabschnitt zwischen den Parallelogrammlenkern sehr einfach dadurch herstellen zu können, dass wenigstens ein Lenker an seiner Außenseite eine Einbuchtung aufweist, durch welche sich ein Grundkörperabschnitt in den Bereich zwischen den Parallellenkern erstrecken kann. Dieser Herstellungsweg ist besonders einfach und schwächt die Parallelogrammlenkerstruktur im Wesentlichen nur gegenüber Momenten um die vertikale Achse, die jedoch im Betrieb einer Waage nur untergeordnet auftreten.

Eine Ausführungsform der Erfindung umfasst danach einen Grundkörper und einen gegenüber dem Grundkörper mittels Parallelführungselementen in einer Z-Richtung geführten Lastaufnehmer. Wenigstens ein Parallelführungselement ist an einem ersten Ende über ein an sich bekanntes Gelenk mit dem Grundkörper verbunden, beispielsweise über eine monolithisch ausgebildete Dünnstelle. Vom ersten Gelenk aus erstreckt sich das Parallelführungselement in einer zur Z-Richtung vorzugsweise senkrecht verlaufenden X-Richtung zu seinem gegenüberliegenden zweiten Ende, wo es über ein vergleichbares Gelenk mit dem Lastaufnehmer verbunden ist.

Der Grundkörper ist zu beiden Seiten einer (gedachten) Ebene E ausgebildet, die sich in der Z-Richtung und einer vorzugsweise hierzu senkrechten X-Richtung erstreckt. Vorzugsweise, aber nicht notwendigerweise kann der Grundkörper symmetrisch zur Ebene E ausgebildet sein.

Erfindungsgemäß weist wenigstens eines der Parallelführungselemente auf seiner der Ebene E abgewandten Außenseite zwischen dem ersten und zweiten Gelenk wenigstens eine Ausnehmung auf, welche das Parallelführungselement in Z-Richtung durchdringt, und durch welche ein Abschnitt des Grundkörpers hindurch ragt. Anders als im Stand der Technik wird hierbei der Grundkörper also nicht durch einen in einem Parallelführungselement in Z-Richtung verlaufenden Durchbruch (der vollständig innerhalb des Parallelführungselements liegt) hindurchgeführt. Stattdessen erhält das Parallelführungselement eine Ausnehmung oder Einbuchtung im Sinne einer von der Seite eingebrachten Vertiefung, so dass das Parallelführungselement an dieser Stelle eine etwas reduzierte Gesamtbreite aufweist. Auf diese Weise kann der Grundkörper an einem Bereich maximaler Breite (von oben durch das obere Parallelführungselement und/oder von unten durch das untere Parallelführungselement) zwischen die Parallelführungselemente geführt werden. Dort geht er einstückig über in einen in X-Richtung zwischen die Parallelführungselemente hervorkragenden Abschnitt des Grundkörpers, wobei letzterer durch diese Konstruktion besonders stabil abgestützt wird und die zwischen den Parallelführungselementen vorgesehenen Stützgelenke für Hebelkonstruktionen deshalb besonders gut vom Grundkörper getragen werden, weil dieser sich durch die wenigstens eine erfindungsgemäße seitliche Ausnehmung des oder der Parallelführungselemente hindurch nach unten und/oder oben (gegen einen unterhalb des unteren bzw. oberhalb des oberen Parallelführungselements vorkragenden Teil des Grundkörpers) abstützen kann.

Die erfindungsgemäße Ausnehmung teilt das betroffene Parallelführungselement in einen ersten und einen zweiten Abschnitt. Der erste Abschnitt erstreckt sich vom ersten, am Grundkörper angeordneten Gelenk bis zur Ausnehmung, während sich der zweite Abschnitt von der Ausnehmung bis zum zweiten, am Lastaufnehmer angeordneten Gelenk erstreckt. Da sowohl die Parallelführungselemente als auch der Grundkörper die maximal zur Verfügung stehende Breite (senkrecht zur Ebene E) bestmöglich ausnutzen sollen, lässt sich nach einer weiteren vorteilhaften Ausführungsform der Erfindung eine Ebene EP definieren, die parallel zur Ebene E verlaufen soll und gedanklich so positionierbar ist, dass der Grundkörper den ersten Abschnitt des Parallelführungselementes entlang dieser Ebene EP vollständig umläuft und die Ebene EP ferner auch mit der Außenseite des ersten Abschnitts zusammen fällt. Bis auf die Stelle der Ausnehmung A hat damit das Parallelführungselement oder zumindest dessen erster Abschnitt dann die gleiche Breite wie der Grundkörper zugunsten einer besonderen Torsionssteifigkeit.

Der erfindungsgemäße Effekt der besonders guten Abstützung des zwischen die Parallelogrammlenkerstruktur vorkragenden Grundkörpers mithilfe des durch die Ausnehmung A ragenden Grundkörperabschnitts macht sich besonders positiv bemerkbar in dem Fall, in dem die Ausnehmung A deutlich näher am zweiten Gelenk, also am Lastaufnehmer liegt, als am ersten Gelenk. Dadurch kann das "abgestützte" Festland sehr nahe an den Lastaufnehmer heranreichen, und mit ihm auch die Stützstelle für einen untersetzenden Hebel, der mit einem Ende am Lastaufnehmer angreift.

Auf das Stützgelenk einwirkende Lasten in Z-Richtung können mit geringer oder gar ohne jegliche Hebelwirkung in Z-Richtung in den oberhalb oder unterhalb der Parallelführungselemente vorhandenen Grundkörper eingeleitet werden. Der in X-Richtung zwischen die Parallelführungselemente hervorkragende Grundkörperabschnitt wird durch den erfindungsgemäßen Grundkörperabschnitt abgestützt und daher nur gering oder gar nicht auf Biegung beansprucht - die Stützstelle kann sich unter Last nicht absenken und die Messgenauigkeit wird entsprechend erhöht.

Da der Grundkörper an der Stelle seiner maximalen Breite durch die erfindungsgemäße Ausnehmung hindurch geführt werden kann, lässt sich auch ein zwischen den Parallelogrammführungselementen am Grundkörper vorzusehendes Stützgelenk sehr gut auf maximaler Breite des Grundkörpers abstützen, es könnte den Grundkörper also in voller Breite durchsetzen.

Eine vorteilhafte Ausführung der Erfindung sieht vor, dass die Parallelführungselemente symmetrisch zur Ebene E ausgebildet sind. Wenigstens ein Parallelführungselement weist dann zwei relativ zur Ebene E symmetrisch gegenüberliegende Ausnehmungen A auf, durch welche sich der Grundkörper - zumindest entlang der Ausnehmungen A, in ebenfalls symmetrischer Weise zwischen die Parallelogrammlenkerstrukturen in Z-Richtung hinauf- oder heraberstrecken kann.

Eine Waage mit einer erfindungsgemäßen Parallelogrammlenkerstruktur ist gegenüber dem Stand der Technik bei geringem Bauraum gegenüber Kräften in Messrichtung und Momenten mit horizontaler Drehachse besonders steif und bietet zugleich eine gute Ecklastunempfindlichkeit.

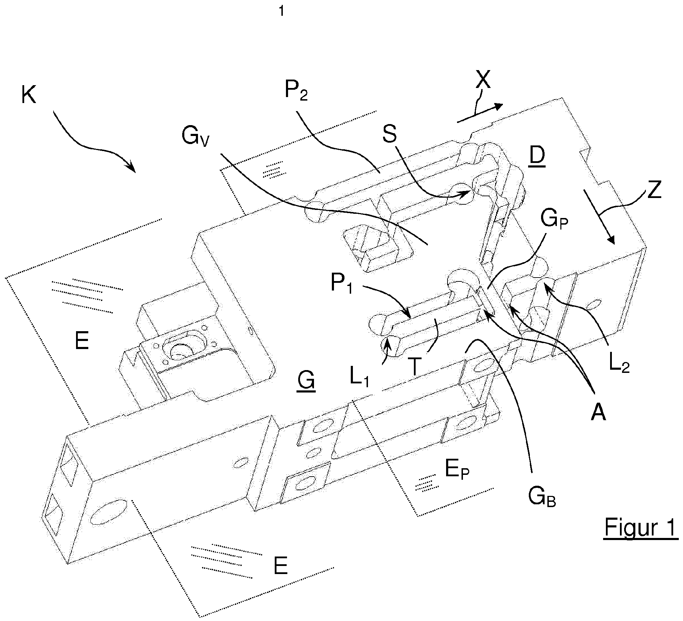

Nachfolgend soll eine Ausführungsform anhand einer Figurendarstellung erläutert werden:
Die einzige Figur 1 zeigt eine monolithische Parallelogrammlenkerstruktur K. Ein Grundkörper G, der im Allgemeinen ortsfest angeordnet wird, trägt an einem ersten Gelenk L1 ein erstes Parallelführungselement P1, welches sich in X-Richtung erstreckt bis zu einem zweiten Gelenk L2, wo es an einem in einer Richtung Z beweglichen Lastaufnehmer D angreift.

Ein weiteres Parallelführungselement P2 ist in Z-Richtung benachbart zum ersten Parallelführungselement P1 angeordnet und erstreckt sich parallel zu diesem ebenfalls zum Lastaufnehmer D. Die Gelenke, über die das zweite Parallelführungselement P2 am Grundkörper G beziehungsweise am Lastaufnehmer D angreifen, sind in Fig. 1 nicht bezeichnet.

Mithilfe der beiden Parallelführungselemente P1 und P2 lässt sich der Lastaufnehmer D virtuell in Z-Richtung relativ zum Grundkörper G bewegen. Eine in Fig. 1 angedeutete und gedachte Ebene E teilt die Parallelogrammlenkerstruktur K in etwa symmetrisch der Länge nach in einen vorderen und einen hinteren Teil auf. Die Ebene E ist definiert durch die Z-Richtung, in welcher die Lasteinleitung erfolgt, und eine hierzu senkrecht verlaufende X-Richtung (in Längsrichtung der Parallelogrammlenkerstruktur K). Auf der von der Ebene E jeweils abgewandten Außenseite des ersten Parallelführungselements P1 ist dieses mit einer Ausnehmung A versehen (die in Fig. 1 nur auf der dem Betrachter zugewandten Vorderseite näher bezeichnet ist). Durch die Ausnehmung A hindurch ragt ein Grundkörperabschnitt GP in Z-Richtung, der einstückig mit dem Grundkörper G ausgebildet ist. Dort, wo der Grundkörperabschnitt GP das Parallelführungselement P1 durchdringt, ist letzteres in seiner Breite entsprechend reduziert (unter "Breite" ist die Richtung senkrecht zur Ebene E zu verstehen).

Zwischen dem oberen und dem unteren Parallelführungselement P2, P1 ist ein Stützgelenk S am Grundkörper G angeordnet, an dem sich ein nicht näher identifizierter und mit dem Lastaufnehmer D verbundener Hebel abstützt. Das Stützgelenk S hat die gleiche Breite wie der Grundkörper G beziehungsweise der Grundkörperabschnitt GP - alle drei Komponenten liegen mit ihrer der Ebene E abgewandten Außenseite in einer gemeinsamen Außenebene EP, welche die maximale Ausdehnung der Parallelogrammlenkerstruktur auf der dem Betrachter zugewandten Seite der Ebene E definiert. Auch der vom ersten Gelenk L1 bis zur Ausnehmung A verlaufende Abschnitt T des ersten Parallelführungselements P1 verläuft mit seiner Außenseite in dieser Außenebene EP.

Eine über den Lastaufnehmer D in das Stützgelenk S eingebrachte und in Z-Richtung wirkende Kraft kann erfindungsgemäß über den Grundkörperabschnitt GP in den sich unterhalb des ersten Parallelführungselements P1 erstreckenden Basisabschnitt GB des Grundkörpers G abgeführt werden. Die Stützwirkung des Grundkörperabschnitts GP stabilisiert den in Fig. 1 von links nach rechts zwischen die Parallelführungselemente hervorkragenden Teil GV des Grundkörpers G und festigt so die Position des Stützgelenks S relativ zum Grundkörper G. Dadurch, dass der Grundkörperabschnitt GP (in Fig. 1 auf Vorder- und Rückseite der gedachten Ebene E) entlang der maximalen Breite der Parallelogrammlenkerstruktur verläuft, wird das Stützgelenk S auch besonders torsionssteif, also gegen eine Verschwenkbewegung um die X-Achse abgestützt.

## Patentansprüche

1. Monolithische Parallelogrammlenkerstruktur (K) für eine Waage, insbesondere eine nach dem Prinzip der elektromagnetischen Kraftkompensation arbeitende Waage, umfassend einen Grundkörper (G) und einen gegenüber dem Grundkörper (G) mittels Parallelführungselementen (P₁, P₂) in einer Z-Richtung geführten Lastaufnehmer (D),
a) wobei wenigstens ein Parallelführungselement (P₁) an einem ersten Ende über ein erstes Gelenk (L₁) mit dem Grundkörper (G) und an einem vom ersten Ende in einer X-Richtung beabstandeten zweiten Ende über ein zweites Gelenk (L₂) mit dem Lastaufnehmer (D) verbunden ist, und
b) wobei der Grundkörper zu beiden Seiten einer Ebene (E) ausgebildet ist, die sich in Z-Richtung und einer dazu vorzugsweise senkrecht verlaufenden X-Richtung erstreckt,
**dadurch gekennzeichnet,**
c) **dass** das Parallelführungselement (P₁) auf zumindest einer der Ebene (E) abgewandten Außenseite zwischen dem ersten Gelenk (L₁) und dem zweiten Gelenk (L₂) wenigstens eine das Parallelführungselement (P₁) in Z-Richtung durchdringende Ausnehmung (A) aufweist, durch welche ein Grundkörperabschnitt (G_{P}) des Grundkörpers (G) hindurchragt.

2. Parallelogrammlenkerstruktur (K) nach Anspruch 1, **dadurch gekennzeichnet, dass** sich ein erster Abschnitt (T) des Parallelführungselements (P₁) vom ersten Gelenk (L₁) bis zur Ausnehmung (A) erstreckt, und dass der Grundkörper (G) den ersten Abschnitt (T) entlang einer gedachten, zur Ebene (E) parallelen Außenebene (E_{P}) vollständig umläuft.

3. Parallelogrammlenkerstruktur (K) nach einem der vorigen Ansprüche, **dadurch gekennzeichnet, dass** die Ausnehmung (A) näher am zweiten Gelenk (L₂) als am ersten Gelenk (L₁) liegt.

4. Parallelogrammlenkerstruktur (K) nach einem der vorigen Ansprüche, **dadurch gekennzeichnet, dass** die Außenseite des Parallelführungselements (P₁) fluchtet mit einem Außenwandabschnitt des Grundkörpers (G).

5. Parallelogrammlenkerstruktur (K) nach einem der vorigen Ansprüche, **dadurch gekennzeichnet, dass** in Z-Richtung zwischen zwei Parallelführungselementen (P₁, P₂) am Grundkörper (G) wenigstens ein Stützgelenk (S) zur Abstützung eines Hebels angeordnet ist, wobei eine Außenseite des Stützgelenks (S) fluchtet mit einer Außenseite des Grundkörperabschnitts (G_{P}).

6. Parallelogrammlenkerstruktur (K) nach einem der vorigen Ansprüche, **dadurch gekennzeichnet, dass** die Parallelführungselemente (P₁, P₂) symmetrisch zur Ebene (E) ausgebildet sind und dass wenigstens eines der Parallelführungselemente (P₁) auf beiden der Ebene (E) abgewandten Außenseiten zwischen dem Gelenk (L₁) und dem Gelenk (L₂) jeweils wenigstens eine das Parallelführungselement (P₁) in Z-Richtung durchdringende Ausnehmung (A) aufweist, durch welche ein Grundkörperabschnitt (G_{P}) des Grundkörpers (G) hindurchragt.

7. Waage mit einer Parallelogrammlenkerstruktur (K) nach einem der vorigen Ansprüche.

## Claims

1. Monolithic parallelogram linkage structure (K) for a weighing device, in particular a weighing device operating on the basis of the principle of electromagnetic force compensation, comprising a base body (G) and a load receptor (D) guided in a Z direction with respect to the base body (G) by means of parallel guiding elements (P₁, P₂),
a) wherein at least one parallel guiding element (P₁) is connected at a first end via a first joint (L₁) to the base body (G) and at a second end, at a distance from the first end in an X direction, via a second joint (L₂) to the load receptor (D), and
b) wherein the base body is formed on both sides of a plane (E), which extends in the Z direction and an X direction preferably running perpendicular thereto,
**characterized**
c) **in that** the parallel guiding element (P₁) has on at least one outer side facing away from the plane (E) between the first joint (L₁) and the second joint (L₂) at least one clearance (A) penetrating the parallel guiding element (P₁) in the Z direction, through which a base body portion (G_{P}) of the base body (G) protrudes.

2. Parallelogram linkage structure (K) according to Claim 1, **characterized in that** a first portion (T) of the parallel guiding element (P₁) extends from the first joint (L₁) to the clearance (A), and **in that** the base body (G) runs completely around the first portion (T) along an imaginary outer plane (E_{P}) parallel to the plane (E).

3. Parallelogram linkage structure (K) according to one of the preceding claims, **characterized in that** the clearance (A) lies closer to the second joint (L₂) than to the first joint (L₁) .

4. Parallelogram linkage structure (K) according to one of the preceding claims, **characterized in that** the outer side of the parallel guiding element (P₁) is in line with an outer wall portion of the base body (G).

5. Parallelogram linkage structure (K) according to one of the preceding claims, **characterized in that** at least one supporting joint (S) for supporting a lever is arranged on the base body (G) in the Z direction between two parallel guiding elements (P₁, P₂), an outer side of the supporting joint (S) being in line with an outer side of the base body portion (G_{P}).

6. Parallelogram linkage structure (K) according to one of the preceding claims, **characterized in that** the parallel guiding elements (P₁, P₂) are formed symmetrically in relation to the plane (E) and **in that** at least one of the parallel guiding elements (P₁)has on both outer sides facing away from the plane (E) between the joint (L₁) and the joint (L₂) in each case at least one clearance (A) penetrating the parallel guiding element (P₁)in the Z direction, through which a base body portion (G_{P}) of the base body (G) protrudes.

7. Weighing device with a parallelogram linkage structure (K) according to one of the preceding claims.

## Revendications

1. Structure monolithique à bras oscillant en parallélogramme (K) pour une balance, en particulier une balance fonctionnant selon le principe de la compensation de force électromagnétique, comprenant un corps de base (G) et un récepteur de charge (D) guidé dans une direction Z par rapport au corps de base (G) au moyen d'éléments de guidage parallèles (P₁, P₂),
a) dans laquelle au moins un élément de guidage parallèle (P₁) est relié à une première extrémité au corps de base (G) par le biais d'une première articulation (L₁) et à une deuxième extrémité espacée de la première extrémité dans une direction X au récepteur de charge (D) par le biais d'une deuxième articulation (L₂), et
b) dans laquelle le corps de base est réalisé des deux côtés d'un plan (E), qui s'étend dans une direction Z et une direction X s'étendant de préférence perpendiculairement à celle-ci,
**caractérisée en ce**
c) **que** l'élément de guidage parallèle (P₁) présente sur au moins un côté extérieur opposé au plan (E), entre la première articulation (L₁) et la deuxième articulation (L₂), au moins un évidement (A) traversant l'élément de guidage parallèle (P₁) dans la direction Z, à travers lequel passe une section de corps de base (Gp) du corps de base (G).

2. Structure à bras oscillant en parallélogramme (K) selon la revendication 1, **caractérisée en ce qu'**une première section (T) de l'élément de guidage parallèle (P₁) s'étend de la première articulation (L₁) à l'évidement (A), et que le corps de base (G) entoure entièrement la première section (T) le long d'un plan extérieur (Ep) imaginaire parallèle au plan (E).

3. Structure à bras oscillant en parallélogramme (K) selon l'une quelconque des revendications précédentes, **caractérisée en ce que** l'évidement (A) est plus près de la deuxième articulation (L₂) que de la première articulation (L₁).

4. Structure à bras oscillant en parallélogramme (K) selon l'une quelconque des revendications précédentes, **caractérisée en ce que** le côté extérieur de l'élément de guidage parallèle (P₁) est aligné avec une section de paroi extérieure du corps de base (G).

5. Structure à bras oscillant en parallélogramme (K) selon l'une quelconque des revendications précédentes, **caractérisée en ce qu'**au moins une articulation d'appui (S) pour soutenir un levier est agencée dans la direction Z entre deux éléments de guidage parallèles (P₁, P₂) au niveau du corps de base (G), dans lequel un côté extérieur de l'articulation d'appui (S) est aligné avec un côté extérieur de la section de corps de base (Gp).

6. Structure à de bras oscillant en parallélogramme (K) selon l'une quelconque des revendications précédentes, **caractérisée en ce que** les éléments de guidage parallèles (P₁, P₂) sont réalisés symétriquement au plan (E) et qu'au moins un des éléments de guidage parallèles (P₁) présente sur les deux côtés extérieurs opposés du plan (E), entre l'articulation (L₁) et l'articulation (L₂) respectivement, au moins un évidement (A) traversant l'élément de guidage parallèle (P₁) dans la direction Z, à travers lequel passe une section de corps de base (Gp) du corps de base (G).

7. Balance avec une structure à bras oscillant en parallélogramme (K) selon l'une quelconque des revendications précédentes.
